# EUROPEAN PATENT APPLICATION

(11) **EP 3 860 244 A1**
(43) Date of publication of application: **04.08.2021**
(21) Application number: 18935882.3
(22) Date of filing: 27.09.2018
(51) Int. Cl.: H04W 68/00, H04W 52/02, H04W 72/04

(54) **USER TERMINAL, WIRELESS BASE STATION, AND WIRELESS COMMUNICATION METHOD**

(71) Applicant: NTT DoCoMo, Inc., Tokyo 100-6150 (JP)
(72) Inventor: TAKEDA, Daiki, Tokyo 100-6150 (JP); TAKEDA, Kazuaki, Tokyo 100-6150 (JP)
(74) Representative: Hoffmann Eitle
(86) International application number: PCT/JP2018/036128
(87) International publication number: WO 2020/065887

(57) **Abstract**

There are provided a user terminal, a radio base station, and a radio communication method in which a wake-up signal (WUS) is capable of being suitably introduced under the presence of multiple user terminals. The user terminal includes a reception section which receives a wake-up signal, and a control section which detects an identifier associated with the wake-up signal and controls, based on the detected identifier, reception of a control signal associated with the wake-up signal. The number of the wake-up signals is smaller than a number relating to a terminal group.

## Description

### Technical Field

The present disclosure relates to a user terminal, a radio base station, and a radio communication method.

### Background Art

In the Universal Mobile Telecommunication System (UMTS) network, Long Term Evolution (LTE) is specified for the purpose of higher speed data rate and low latency, and the like. Furthermore, a system that is a successor to LTE has also been under study for the purpose of broader bandwidth and higher speed than in LTE. Examples of the system that is a successor to LTE include LTE-Advanced (LTE-A), Future Radio Access (FRA), 5th generation mobile communication system (5G), 5G plus (5G+), Radio Access Technology (New-RAT), New Radio (NR), and the like.

The Third Generation Partnership Project (3GPP), a technical study for suppressing power consumption by a user terminal (User Equipment (UE)) has been conducted.

For example, a wake-up signal (WUS) is introduced in Release 15 (Rel.15) (for example, NPL 1).

### Citation List

### Non-Patent Literature

NPL 1
3GPP TS 36.304, "User Equipment (UE) procedures in idle mode (Release 15)", June 2018

### Summary of Invention

### Technical Problem

However, in a case where many more user terminals are assumed, there is a need to conduct a further study on the introduction of a WUS.

An object of the present disclosure is to provide a user terminal, a radio base station, and a radio communication method in which a WUS is capable of being suitably introduced in a case where more many user terminals.

### Solution to Problem

A user terminal according to one aspect of the present disclosure includes: a reception section that receives a wake-up signal; and a control section that detects an identifier associated with the wake-up signal and that controls, based on the detected identifier, reception of a control signal associated with the wake-up signal, in which the number of the wake-up signals is smaller than a number relating to a terminal group.

A radio base station according to one aspect of the present disclosure includes: a transmission section that transmits a wake-up signal; and a control section that associates an identifier with the wake-up signal, in which the number of the wake-up signals is smaller than a number relating to a terminal group.

A radio communication method according to one aspect of the present disclosure includes: receiving a wake-up signal; detecting an identifier associated with the wake-up signal; and controlling, based on the detected identifier, reception of a control signal associated with the wake-up signal, in which the number of the wake-up signals is smaller than a number relating to a terminal group.

### Advantageous Effects of Invention

According to the present disclosure, in a case where many more user terminals are assumed, a WUS can be suitably introduced.

### Brief Description of Drawings

FIG. 1 is a diagram illustrating a first example of a WUS in Rel.15;
FIG. 2 is a diagram illustrating a second example of the WUS in Rel. 15;
FIG. 3 is a diagram illustrating a first example of a WUS that is configured for every UE group;
FIG. 4 is a diagram illustrating a second example of the WUS that is configured for every UE group;
FIG. 5 is a block diagram illustrating an example of a configuration of a radio base station according to an embodiment;
FIG. 6 is a block diagram illustrating an example of a configuration of a user terminal to an embodiment;
FIG. 7 is a diagram illustrating a first example of association between a UE group and a WUS ID according to an embodiment;
FIG. 8 is a diagram illustrating a second example of the association between the UE group and the WUS ID according to an embodiment;
FIG. 9 is a diagram illustrating a third example of the association between the UE group and the WUS ID according to an embodiment;
FIG. 10 is a diagram illustrating a first example of association between a WUS and a WUS ID according to an embodiment;
FIG. 11 is a diagram illustrating a second example of the association between the WUS and the WUS ID according to an embodiment;
FIG. 12 is a diagram illustrating a third example of the association between the WUS and the WUS ID according to an embodiment;
FIG. 13 is a diagram illustrating a fourth example of association between the WUS and the WUS ID according to an embodiment; and
FIG. 14 is a diagram illustrating an example of a hardware configuration of a radio base station and a user terminal in the present disclosure.

### Description of Embodiments

An embodiment in the present disclosure below will be described below with reference to the drawings.

### (Embodiment)

The present embodiment relates to a wake-up signal (hereinafter referred to "WUS") that is a technique for suppressing power consumption by UE. First, a background of the WUS is described.

For establishing 5G standards, in Release 15 (Rel.15), the WUS for suppressing the power consumption by the UE intended for the IoT is introduced.

It is noted that the UE intended for IoT may be referred to as UE intended for the narrow band IoT (NB-IoT) or enhanced machine type communication (eMTC). Furthermore, the UE in the present disclosure is not limited to the UE intended for IoT. For example, the UE in the present disclosure may be UE intended for NR

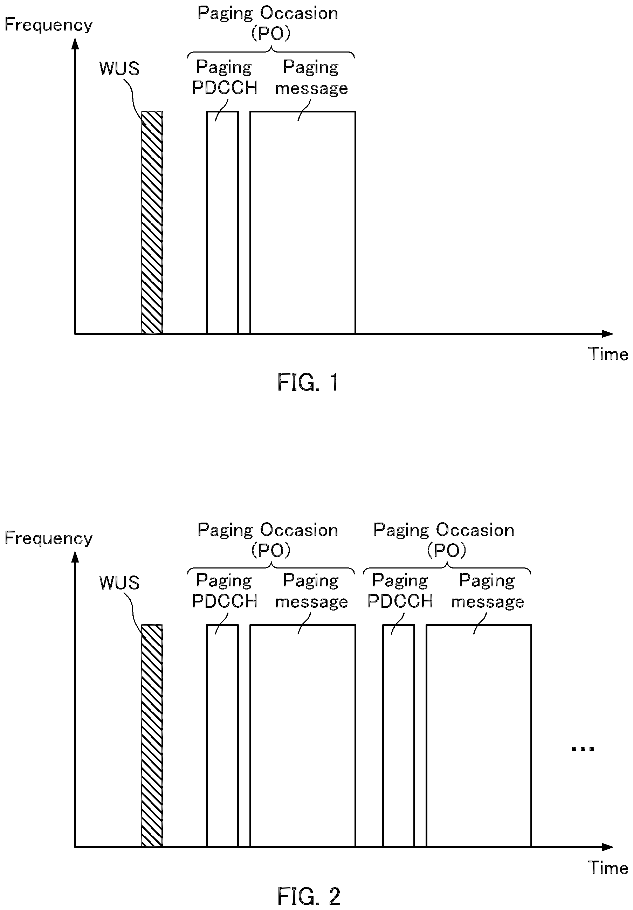

FIG. 1 is a diagram illustrating a first example of a WUS in Rel.15. FIG. 2 is a diagram illustrating a second example of the WUS in Rel.15.

The horizontal axis in FIGS. 1 and 2 represents time and the vertical axis represents a frequency. In FIGS. 1 and 2, the WUS, and a Paging Physical Downlink Control Channel (PDCCH) and a paging message that are configured at a later time than the WUS are illustrated. It is noted that, in some cases, each of the paging PDCCH and the paging message is referred to as a control signal, a paging signal, or a paging occasion. In some cases, the paging occasion is hereinafter expressed as "PO" for short.

In FIG. 1, an example of a case where a non-repetitive PO is configured and where a one-time PO is present is illustrated. In FIG. 2, an example of a case where a repetitive PO and where the PO is repeated is illustrated.

It is noted that in FIGS. 1 and 2, sizes of the paging PDCCH and the paging message are examples and that the present disclosure is not limited to these. Furthermore, in figures subsequent to FIGS. 1 and 2, the sizes of the paging PDCCH and the paging message are also an example as in FIGS. 1 and 2, and the present disclosure is not limited to these.

The WUS and the PO that are illustrated in FIGS. 1 and 2, for example, are signals that are transmitted in a case where a radio base station provides a "wake-up" instruction to a user terminal in an idle mode. It is noted that the user terminal in the idle mode proceeds from the idle mode, for example, to connected mode, based on detection processing of the WUS and monitoring processing of the PO in accordance with a result of the WUS detection.

It is noted that the idle mode, for example, refers to a mode in which the user terminal is a state of being able to receive a signal (a downlink signal) intermittently from the radio base station. The connected mode, for example, refers to a mode in which the user terminal is in the state of being able to receive the downlink signal and is in a state of being able to transmit a signal (an uplink signal) to the radio base station.

The terms the "idle mode" and the "connected mode" in the present embodiment are examples of the term that refers to a mode for the user terminal, and the present disclosure is not limited to these. Furthermore, the WUS and the PO are described as examples of the "wake-up" instruction. However, the term the "wake-up" is an example and the present disclosure is not limited to this.

In a case where the WUS is detected, the user terminal monitors the PO that is associated with the user terminal. Furthermore, in a case where the WUS is not detected, the user terminal may not monitor the PO. The PO monitoring, for example, is equivalent to the detection processing of the paging PDCCH, and reception processing of the paging message, which is based on a result of the detection of the paging PDCCH. By monitoring the PO, the user terminal proceeds from the idle mode, for example, to the connected mode.

With the WUS in Rel.15, which is illustrated in FIGS. 1 and 2, among user terminals that are present within an area covered by the radio base station, for example, all user terminals that are associated with the PO detects the WUS, and thus proceeding to the connected mode takes place. In this case, because the user terminal in the idle mode that may not proceed to the connected mode proceeds to the connected mode, there is a likelihood that the power consumption by the user terminal will increase.

In the discussion on the establishment of 5G standards at the Release 16 (Rel.16) stage, it has been considered that in order to suppress the power consumption by the user terminal, one or more groups (aggregation) is configured for a user terminal and that the WUS associated with every group is configured. In a case where the WUS is configured for every group, the radio base station may provide the "wake-up" instruction.

It is noted that, in some cases, a group that is configured for the user terminal is expressed as "UE group". Furthermore, when multiple UE groups are described distinguishably, in some cases, an index is assigned to a UE group, and groups are expressed as UE group #1, UE group #2, UE group #3, and so forth. It may be understood that the index which is assigned to a UE group is equivalent to an identifier for identifying the UE group. In some cases, the identifier for identifying the UE group is expressed as "UE group ID". It may be said that the UE group ID is associated with each UE group.

It is noted that a method of determining a UE group and a method of associating each user terminal and a UE group are not limited. Furthermore, the number of user terminals that are included in a UE group may be equal to or greater than 1. Furthermore, a method of notifying a user terminal of information indicating a UE group to which a user terminal belongs is also not limited.

Furthermore, the terms the "UE group" and the "UE group ID" are examples, and the present disclosure are not limited to these. The group that is configured for the user terminal, for example, may be referred to as "user group", "UE set", or "user set, and may be referred to as any other term.

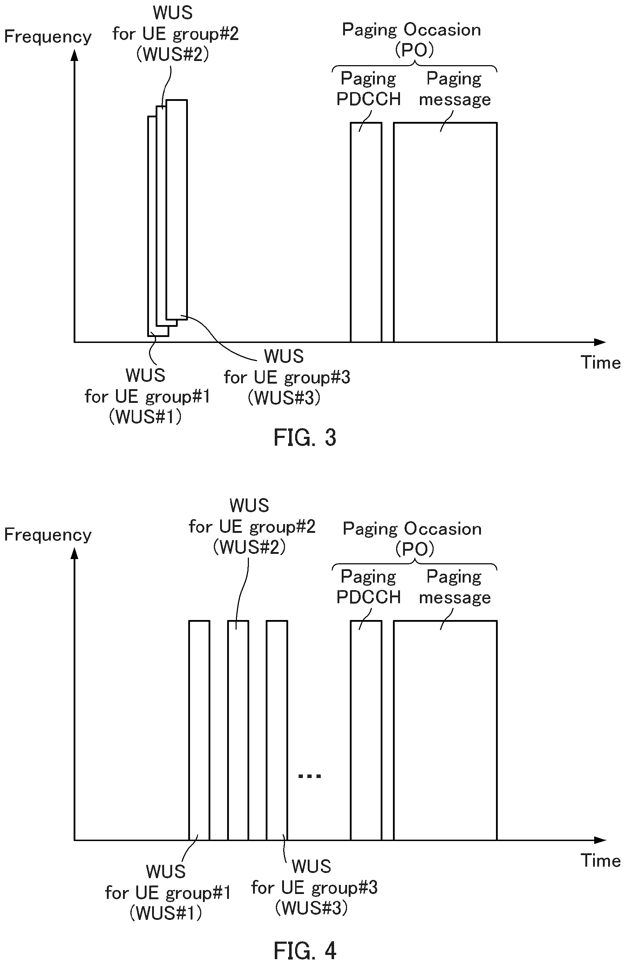

FIG. 3 is a diagram illustrating a first example of a WUS that is configured for every UE group. FIG. 4 is a diagram illustrating a second example of the WUS that is configured for every UE group.

The horizontal axis in FIGS. 3 and 4 represents time and the vertical axis represents a frequency. In FIGS. 3 and 4, a timing of the WUS that is configured for each of the three UE groups and the PO that is configured at a later timing than the WUS are illustrated. Furthermore, in FIGS. 3 and 4, transmission timings of the WUS (WUS #1) that is associated with UE group #1, the WUS (WUS #2) that is associated with UE group #2, and the WUS (WUS #3) that is associated with UE group #3 are illustrated.

In FIG. 3, an example is illustrated in which Code Division Multiplexing (CDM) is performed on three WUSs at the same timing (for example, in the same symbol). Furthermore, in FIG. 4, an example is illustrated in which Time Division Multiplexing (TDM) is performed on three WUSs.

For example, in a case where the WUS is detected, a user terminal determines whether or not the detected WUS is the WUS that is associated with a UE group to which the user terminal belongs. Then, in a case where the detected WUS is associated with the UE group to which the user terminal belongs, the user terminal monitors the PO.

For example, in a case where the user terminal detects WUS #3, the user terminal determines that WUS #3 is associated with UE group #3. Then, the user terminal that belongs to UE group #3 monitors the PO. The user terminal that does not belong to UE group #3 may not monitor the PO. It is noted that identification information indicating the UE group to which the user terminal belongs, for example, is notified in advance by the radio base station to the user terminal.

The WUS is configured for every UE group, and thus, for example, the proceeding to the connected mode of the user terminal that may not proceed from the idle mode to the connected mode may be avoided. Because of this, the power consumption by the user terminal can be suppressed.

At this point, in a case where the WUS as described above is introduced, for example, a further improvement relating to the setting of the WUS is considered. For example, in an example in FIG. 3, because three WUSs are multiplexed using CDM at the same time, a transmit power can be distributed to each WUS. Thus, a transmit power of each WUS decreases. The decrease in the transmit power of each WUS leads to reducing a communication area. Furthermore, in an example in FIG. 4, three WUSs are multiplexed using TDM. Because of this, time overhead in the detection of the WUS increases.

Accordingly, in the present disclosure, a method is described in which, in a case where the WUS is configured for every UE group, the decrease in the transmit power of the WUS and/or the increase in the time overhead are suppressed, thereby setting a suitable WUS.

It is noted that an identifier for identifying a WUS from any other WUSs may be associated with the WUS. For example, in some cases, the identifier of the WUS identifier is expressed as "the WUS ID". For example, WUS #i (i is an integer that is equal to or greater than 1) is equivalent to a WUS of which a WUS ID is "i". In other words, WUS #i is equivalent to a WUS that has the WUS ID #i.

It is noted that the UE group ID and the WUS ID are associated with each other on a one-to-one basis. In a case where the UE group ID and the WUS ID are associated with each other on a one-to-one basis, in some cases, the WUS that is to be associated with UE group #i is expressed as WUS #i.

Furthermore, the term "the WUS ID" is an example, and the present disclosure is not limited to this.

Next, a radio communication system according to the present embodiment will be described.

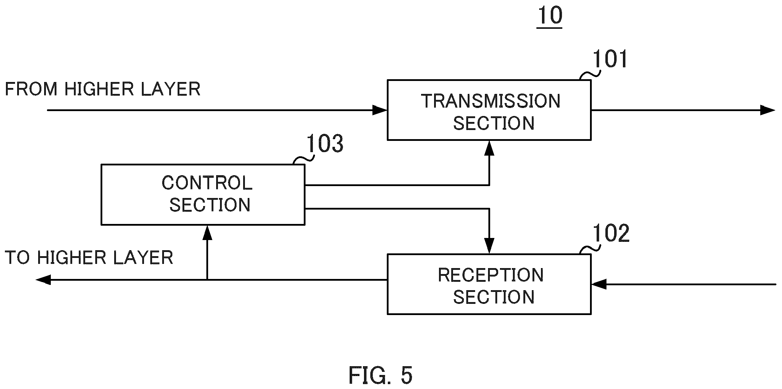

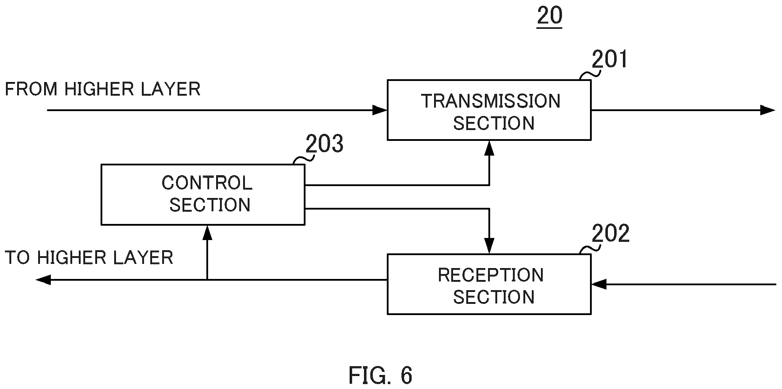

The radio communication system according to the present embodiment includes radio base station 10 (for example, also referred to as an eNodeB (eNB) or gNodeB (gNB)) that is illustrated in FIG. 5, and user terminal 20 (for example, also referred to as the UE) that is illustrated in FIG. 6. User terminal 20 has a radio connection (radio access) to radio base station 10. It is noted that, in the following, in some cases, radio base station 10 is expressed as base station 10 for short.

It is noted that configurations of radio base station 10 and user terminal 20 that will be described below represents an example of a function according to the present embodiment. Radio base station 10 and user terminal 20 may have a function that is not illustrated. Furthermore, in the case of a function of performing an operation according to the present embodiment, a function category and/or a name of a functional section are not limited.

FIG. 5 is a block diagram illustrating an example of the configuration of radio base station 10 according to the present embodiment. Radio base station 10 includes transmission section 101, reception section 102, and control section 103.

Transmission section 101 generates various physical layer signals from a higher layer signal, and performs processing that transmits the generated signal (the downlink signal) to user terminal 20. For example, under the control of control section 103, transmission section 101 transmits the downlink signal. For example, the WUS, a signal that is mapped to the paging PDCCH, and a paging message may be included in the downlink signal.

Reception section 102 receives a signal (an uplink signal) from user terminal 20 and performs processing that acquires the higher layer signal from the received physical layer uplink signal.

Control section 103 performs control of transmission processing in transmission section 101 and control of reception processing in reception section 102. For example, control section 103 controls the transmission processing of the WUS, a paging PDCCH signal, and a paging message in the transmission section 101. For example, control section 103 controls transmission section 101 in such a manner that the transmission of the WUS, the paging PDCCH signal, and the paging message.

FIG. 6 is a block diagram illustrating the configuration of user terminal 20 according to the present embodiment. User terminal 20 includes transmission section 201, reception section 202, and control section 203.

Transmission section 201 generates various physical layer signals from a higher layer signal and performs processing that transmits the generated uplink signal to radio base station 10.

Reception section 202 receives a downlink signal from radio base station 10 and performs processing that acquires a higher layer signal from the received physical layer downlink signal. For example, under the control of control section 203, reception section 202 receives the downlink signal.

Control section 203 performs control of the transmission processing in transmission section 201 and control of the reception processing in reception section 202. For example, control section 203 performs the detection processing of the WUS and controls the monitoring processing of the PO in reception section 202 based on a result of the detection processing of the WUS. Furthermore, based on a result of the monitoring processing of the PO, control section 203 performs control that causes transmission and reception states in user terminal 20 to proceed from the idle mode, for example, to the connected mode.

It is noted that the detection processing of the WUS in user terminal 20 will be described below.

Next, the configuration of the WUS according to the present embodiment will be described.

As illustrated in FIGS. 3 and 4, in a case where the WUS is configured for every UE group, it is assumed that multiple WUSs are transmitted. In the present embodiment, in the case where the WUS is configured for every UE group, a condition that the number of WUSs is limited is set up. For example, the number of candidates for the WUS that are transmittable from radio base station 10 may be limited, and the number of WUSs that are to be transmitted from radio base station 10 may be limited.

The candidate for the WUS that is transmittable from radio base station 10 may correspond to the candidate for the WUS that is prepared in radio base station 10. A limitation on the number of the candidates for the WUS that are transmittable from radio base station 10 corresponds to a limitation on the number of candidates for a sequence of WUSs that are transmittable. The limitation on the number of the candidates for the WUS that are transmittable from radio base station 10 may be understood as being equivalent to a limitation on the number of candidates for the WUSs that are receivable in user terminal 20.

The limitation on the number of the candidates for the WUS that are to be transmitted from radio base station 10 corresponds to the number of sequences of WUSs that are to be transmitted. The limitation on the number of the candidates for the WUS that are to be transmitted from radio base station 10 may be understood as being equivalent to a limitation on the number of the WUSs that are to be received in user terminal 20. It is noted that user terminal 20 may receive all of the WUSs that are transmitted from radio base station 10 and may receive one or several of the WUSs.

A range (for example, time) of setting up a condition is not particularly limited. For example, a condition that is set up according to the present embodiment may be a condition that the number of WUSs that are transmitted at the same time (at the same timing). Furthermore, the condition that is set up according to the present embodiment may be a condition that the number of WUSs that are transmitted within a prescribed time. Furthermore, the condition that is set up according to the present embodiment may be a condition that the number of WUSs that are associated with one or more POs.

The number of WUSs that are limited is not particularly specified, but, for example, the number of WUSs that are limited may be a number that is smaller than the number relating to the UE group. The number relating to the UE group may be a number that is determined based on the number of UE groups. For example, the number relating to the UE group may be the number of UE groups that is designated by radio base station 10, and may be a sum of the number of UE groups that are designated by radio base station 10 and the number of combinations of UE groups that are designated by radio base station 10.

Furthermore, the number relating to the UE group may be determined based on the number of UE groups and a resource that is used for transmission and reception of the WUS. For example, the number relating to the UE group may be determined based on the number of UE groups and a transmit power (for example, a maximum transmit power) that is used for the transmission of the WUS. Alternatively, the number relating to the UE group may be determined based on the number of UE groups and a time resource and/or a frequency resource that are used for the transmission and reception of the WUS. It is noted that the number of WUSs that are limited may be determined based on the resource that is used for the transmission and reception of the WUS, which is described above.

Furthermore, for example, the number of WUSs may be limited to 1. A first example in which the number of WUSs is limited to 1 will be described below.

For example, in a case where the WUS is multiplexed using CDM, the number of WUSs that are transmitted is limited, and thus the number of WUSs that are multiplexed using CDM at the same timing is reduced. Because of this, a decrease in the transmit power of the WUS can be suppressed. In the first example, the number of WUSs that are transmitted is limited to 1, and thus the number of WUSs that are multiplexed using CDM at the same timing can be 1. Because of this, the decrease in the transmit power of the WUS can be suppressed.

For example, in a case where the WUS is multiplexed using TDM, the number of WUSs that are transmitted, and thus the number of WUSs that are multiplexed using TDM is reduced. Because of this, the increase in the time overhead in the detection of the WUS can be suppressed. In the first example, the number of WUSs that are transmitted earlier than the PO is limited to 1, and thus the WUS is transmitted at one timing. Because of this, the increase in the time overhead in the detection of the WUS can be suppressed.

It is noted that a correspondence relationship between the UE group ID and the WUS ID in a case where the number of WUSs is not limited. For example, the UE group ID and the WUS ID are associated with each other on a one-to-one basis. In a case where the UE group ID and the WUS ID correspond to each other on a one-to-one basis, radio base station 10 may provide the "wake-up" instruction to UE groups of which the number is the same as the number of WUSs that are limited. As in the first example, in a case where the number of WUSs is not limited to 1, radio base station 10 may provide the "wake-up" instruction to one UE group.

Alternatively, the WUS ID and the UE group ID are associated with each other on a one-to-many basis. An example in which the WUS ID and the UE group ID are associated with each other on a one-to-many basis will be described below.

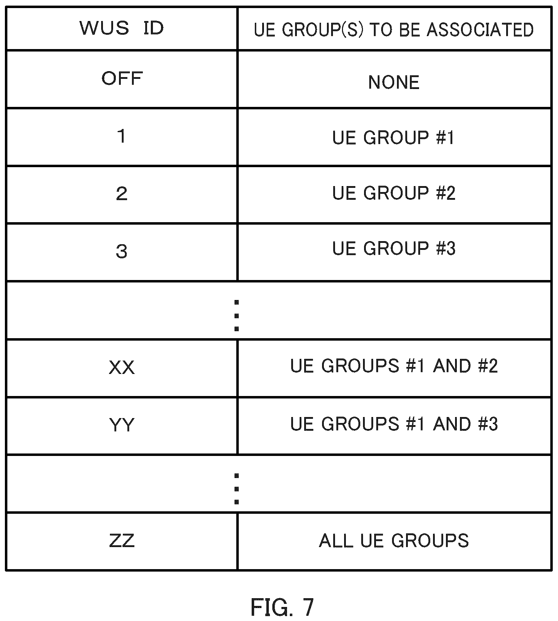

FIG. 7 is a diagram illustrating a first example of association between the UE group and the WUS ID according to the present embodiment.

In FIG. 7, for example, WUS IDs that are associated with UE groups #1 to #3 are "1" to "3", respectively. Furthermore, the WUS ID that is associated with a combination of UE group #1 and UE group #2 is "XX". Furthermore, the WUS ID that is associated with a combination of UE group #1 and UE group #3 is "YY". Furthermore, the WUS ID that is associated with all UE groups is "ZZ".

For example, in a case where an example that is illustrated in FIG. 7 is applied to the association between the UE group ID and the WUS ID and where radio base station 10 provides the "wake-up" instruction to the UE in UE group #1, the WUS with which WUS ID #1 is associated may be transmitted. Furthermore, for example, in a case where the "wake-up" instruction is provided to the pieces of UE in UE group #1 and UE group #2, radio base station 10 may transmit the WUS with which WUS ID#XX is associated.

It is noted that in a case where the example in FIG. 7 is applied, if the WUS ID that is associated with the WUS is "1", "XX", "YY", or "ZZ", the UE in UE group #1 monitors the PO.

As illustrated in FIG. 7, in a case where the "wake-up" instruction is provided to pieces of UE in multiple UE groups, radio base station 10 can reduce the number of WUSs by associating one WUS ID with multiple UE group IDs. For this reason, for example, in a case where a limitation is imposed on the number of WUSs, the "wake-up" instruction can also be provided to pieces of UE in multiple UE groups.

It is noted that the example in FIG. 7 is an example in which it is illustrated that one WUS ID is associated with one or more UE group ID. Next, an example in which a combination of WUS IDs that are associated with two WUSs, respectively, is associated with one or more UE groups will be described.

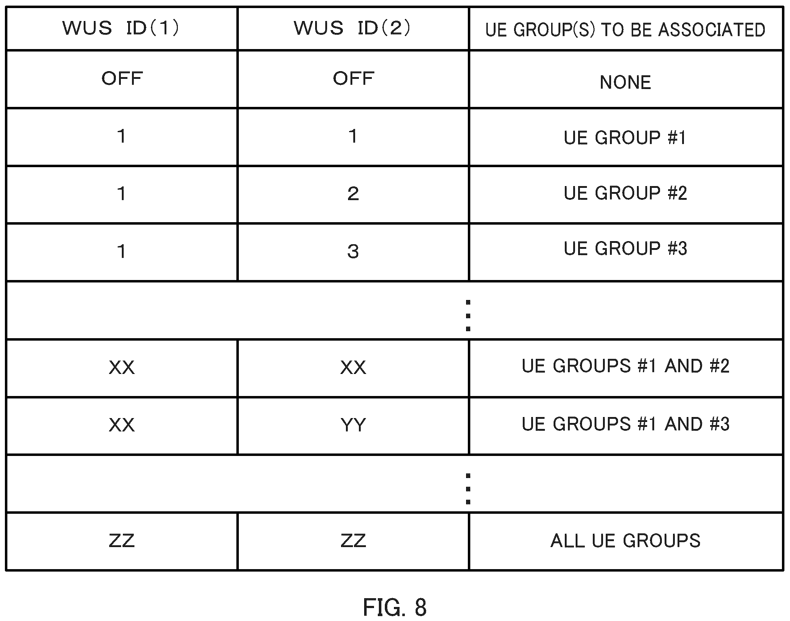

FIG. 8 is a diagram illustrating a second example of the association between the UE group and the WUS ID according to the present embodiment.

In FIG. 8, an example of association between two WUS IDs (WUS ID(1) and WUS ID(2)) and a combination of UE group IDs is illustrated. It is noted that the WUS associated with WUS ID(1) and the WUS associated with WUS ID(2) are multiplexed using any one of TDM, FDM, and CDM.

It is noted that for example, the WUS associated with WUS ID (1) may be referred to as a first WUS. Furthermore, the WIS associated with WUS ID(2) may be referred to as a second WUS.

In FIG. 8, for example, WUS ID(1) and WUS ID(2) that are associated with UE group #1 are "1" and "1", respectively. Furthermore, for example, WUS ID(1) and WUS ID(2) that are associated with a combination of UE group #1 and UE group #2 are "XX" and "XX", respectively. It is noted that in the following description, for example, WUS ID(1) #i (i is an integer that is equal to or greater than 1) indicates that WUS ID(1) is "i" and WUS ID(2) #i indicates that WUS ID(2) is "i".

For example, in a case where an example that is illustrated in FIG. 8 is applied and where radio base station 10 provides the "wake-up" instruction to the UE in UE group #1, the first WUS with which WUS ID(1)#1 is associated and the second WUS with which WUS ID(2)#1 is associated may be transmitted. Furthermore, for example, in a case where radio base station 10 provides the "wake-up" instruction to the pieces of UE in UE group #1 and UE group #2, the first WUS with which WUS ID(1)#XX is associated and the second WUS with which WUS ID(2)#XX is associated may be transmitted.

As illustrated in FIG. 8, in a case where the "wake-up" instruction is provided to pieces of UE in multiple UE groups, radio base station 10 can reduce the number of WUSs by associating a combination of WUS IDs with one or more UE groups. Furthermore, because the number of WUS IDs can be reduced, a load relating to the detection processing of the WUS can be suppressed.

For example, a case where a combination of UE groups that is associated with the WUS ID has 9 patterns is described as an example. In a case where one WUS ID and the combination of UE groups, which has the 9 patterns, are associated with each other, at least 9 WUS IDs are used. On the other hand, combinations of two WUS IDs and the combination of UE groups, which has the 9 patterns, are associated with each other, at least 3 WUS IDs are used. Because of this, the number of WUS IDs can be reduced.

It is noted that in FIG. 8, examples of combinations of two WUS IDs are illustrated, but that the present disclosure is not limited to these. For example, combinations of three or more WUS IDs and the combination of UE groups may be associated with each other.

Furthermore, the combinations of WUS IDs, which are described above, may include a combination in the case of "OFF" in the WUS. The case of "OFF" in the WUS refers to a case where the WUS is not detected. It is noted that cases where the WUS is not detected include a case where the WUS is not transmitted.

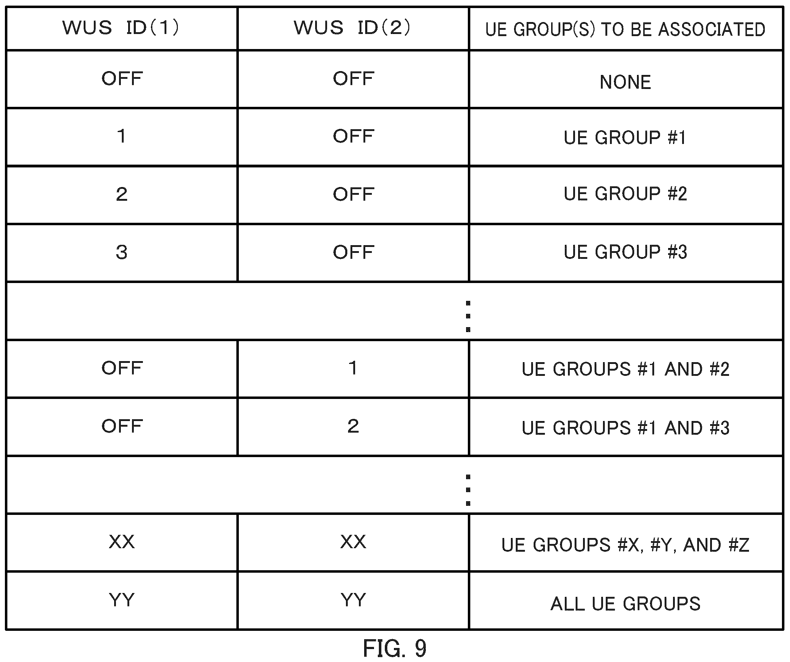

FIG. 9 is a diagram illustrating a third example of the association between the UE group and the WUS ID according to the present embodiment.

In FIG. 9, an example of association between two WUS IDs (WUS ID(1) and WUS ID(2)) and a combination of UE group IDs is illustrated.

In FIG. 9, for example, WUS ID(1) and WUS ID(2) that are associated with UE group #1 are "1" and "OFF", respectively. At this point, "OFF" in WUS ID(2) may be understood as being equivalent to non-detection of the second WUS.

Furthermore, for example, WUS ID(1) and WUS ID(2) that are associated with a combination of UE group #1 and UE group #2 are "OFF" and "1", respectively. At this point, "OFF" in WUS ID(1) may be understood as being equivalent to non-detection of the first WUS.

For example, in a case where an example that is illustrated in FIG. 9 is applied and where radio base station 10 provides the "wake-up" instruction to the UE in UE group #1, the first WUS with which WUS ID(1)#1 is associated may be transmitted without transmitting the second WUS. Furthermore, for example, in the case where the "wake-up" instruction is provided to the pieces of UE in UE group #1 and UE group #2, radio base station 10 may transmit the second WUS with which WUS ID(2)#1 is associated, without transmitting the first WUS.

As illustrated in FIG. 9, the combinations of WUS IDs, which are described above, include a combination in the case of "OFF" in the WUS", and thus the number of WUS IDs can be reduced. Because of this, the load relating to the detection processing of the WUS can be suppressed.

It is noted that in FIG. 9, the example in which both of WUS ID(1) and WUS ID(2) contain "OFF" is illustrated, but that one of WUS ID(1) and WUS ID(2) may contain "OFF" and the other may not contain "OFF".

Alternatively, at least one of WUS ID(1) and WUS ID(2) may contain "OFF" or "ON". In other words, at least one of WUS ID(1) and WUS ID(2) may contain occurrence or non-occurrence of the detection of the WUS.

For example, in a case where WUS ID(1) contains "OFF" or "ON", the WUS ID is not associated with the first WUS. In this case, user terminal 20 may detect the presence or absence of the first WUS and may not identify the WUS ID that is associated with the first WUS. Because of this, the load on the detection processing in user terminal 20 can be reduced.

For example, in a case where WUS ID(1) contains "OFF" or "ON" and where WUS ID(2) contains any one of "1" to "N", 2 × N patterns can be indicated by combining WUS ID(1) and WUS ID(2).

As described above, the combination of two IDs may be a combination that includes the WUS ID (for example, "ON") indicating that the WUS is detected, or the WUS ID (for example, "OFF") indicating that the WUS is not detected. It is noted that the WUS ID (for example, "ON") indicating that the WUS is detected, or the WUS ID (for example, "OFF") indicating that the WUS is not detected may be included in a combination of three or more WUS IDs.

It is noted that, as described above, the WUS is associated with the WUS ID and that the detection processing that detects the WUS ID from the WUS is performed in the UE. In the following, an example of the association between the WUS and the WUS ID will be described below. It is noted that a method of associating the WUS and the WUS ID with each other is not limited to an example that will be described below.

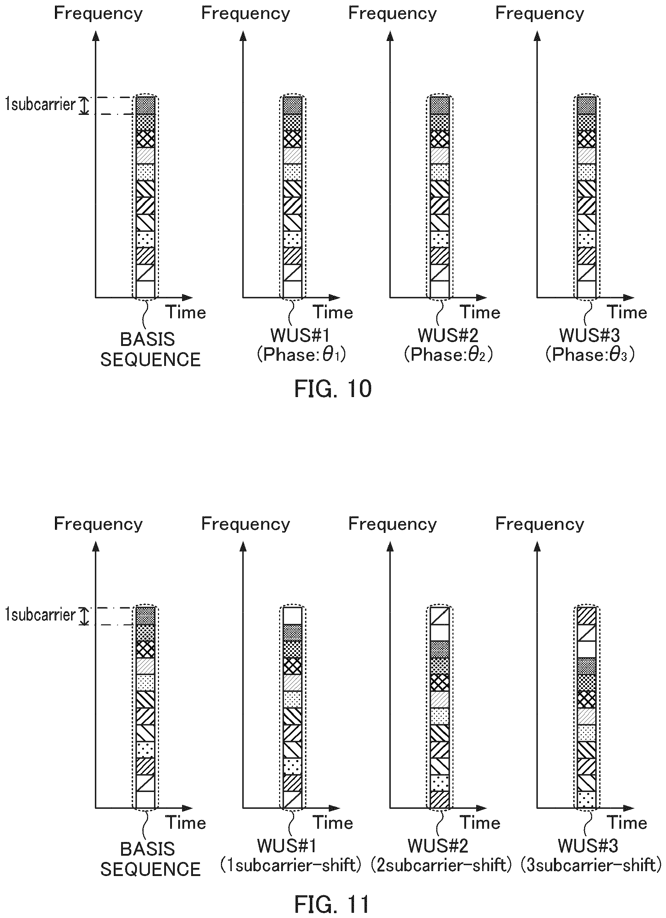

FIG. 10 is a diagram illustrating a first example of the association between the WUS and the WUS ID according to the present embodiment.

In FIG. 10, a reference sequence (basis sequence) that serves as a reference for generation of the WUS, and WUSs #1 to #3 that are generated based on the reference sequence are illustrated. The horizontal axis in FIG. 10 represents time and the vertical axis represents a frequency. It is noted that the term reference sequence is an example and that the present disclosure is not limited to this. For example, the reference sequence may also be referred to as a reference signal, a basic signal, a basic reference, or the like. The base sequence, for example, may be known in user terminal 20 and may be notified by radio base station 10.

Then, in the reference sequence and the WUS, one rectangle that results from partitioning in the frequency direction, for example, indicates one Resource Element (RE). A width in the frequency direction, of one RE is equivalent to one subcarrier, and a width in the time direction is equivalent to one symbol. In FIG. 10, the WUS, for example, has widths in the frequency direction, of 12 subcarriers. It is noted that the number of subcarriers of the WUS is not limited to 12 and may be equal to or smaller than 11 or may be equal to or greater than 13.

In FIG. 10, a display aspect of each RE that is included in the WUS represents an example of an element in a sequence that is used for the WUS. For example, the same display aspect represents that the element in the sequence that is used for the WUS is the same. A sequence that is the same as the reference sequence is used for WUSs #1 to #3 that are illustrated in FIG. 10.

Then, the WUS ID that is associated with each of WUSs #1 to #3 is indicated by a phase difference between the reference sequence and the WUS. It is noted that the reference sequence is a sequence indicating a reference for the phase difference.

For example, WUS #1 in FIG. 10 has a shift difference of θ1 with respect to the reference sequence, WUS #2 has a phase difference of θ2 with respect to the reference sequence, and WUS #3 has a phase difference of θ3 with respect to the reference sequence. θ1, θ2, and θ3 are different from each other.

In the case of FIG. 10, user terminal 20 receives the WUS, and, for example, performs comparison processing (for example, cross-correlation processing) of the reference sequence and the WUS and estimates the phase difference between the reference sequence and the WUS. In a case where the estimated phase difference is a phase difference with the WUS ID that is associated with the UE group to which user terminal 20 belongs, user terminal 20 determines that the received WUS is associated with the UE group to which user terminal 20 belongs. In a case where the received WUS is associated with the UE group to which user terminal 20 belongs, user terminal 20 performs monitoring of the PO.

In this method, the same sequence is used for the WUS with which different WUS IDs are associated. Because of this, the detection processing can be simplified. For this reason, simple detection processing of the WUS can be performed robustly.

It is noted that the WUS ID may be associated with a reference that serves as a reference for the phase difference (in other words, the WUS whose difference with the reference sequence is zero).

Furthermore, in a case where multiple WUSs to which the example in FIG. 10 is applied are transmitted, user terminal 20 may perform channel estimation using at least one of the received WUSs and, based on a result of the channel estimation, may perform estimation of the phase difference. Alternatively, in the case where multiple WUSs to which the example in FIG. 10 is applied are transmitted, user terminal 20 may perform cross-correlation using at least two of the received WUSs, and, based on a result of the cross-correlation, may the estimation of the phase difference. Alternatively, user terminal 20 may perform computation of the channel estimation and the cross-correlation, and, based on results of the computation of both, may perform the estimation of the phase difference.

FIG. 11 is a diagram illustrating a second example of the association between the WUS and the WUS ID according to the present embodiment.

In FIG. 11, in the same as in FIG. 10, the reference sequence that serves as the reference for generation of the WUS, and WUSs #1 to #3 that are generated based on the reference sequence are illustrated. The horizontal axis in FIG. 11 represents time and the vertical axis represents a frequency.

Then, in the reference sequence and the WUS, one rectangle that results from partitioning in the frequency direction, for example, indicates one RE in the same manner as in FIG. 10.

In FIG. 11, a display aspect of each RE that is included in the reference sequence and the WUS represents an example of an element in a sequence that is used for the WUS. For example, the same display aspect represents that the element in the sequence that is used for the WUS is the same. A sequence that is the same as the reference sequence is used for WUSs #1 to #3 that are illustrated in FIG. 11.

Then, the WUS ID that is associated with each of WUSs #1 to #3 is indicated by an amount of shift in the frequency direction (an amount of shift in a subcarrier) between the reference sequence and the WUS.

For example, WUS #1 in FIG. 11 is the WUS that results from shifting the reference sequence by one subcarrier. WUS #2 is the WUS that results from shifting the reference sequence by two subcarriers. WUS #3 is the WUS that results from shifting the reference sequence by three subcarriers. It is noted that, in FIG. 11, the example in which the shifting occurs by one subcarrier at a time is illustrated, but that the amount of the shift may correspond to two or more subcarriers.

In the case of an example in FIG. 11, user terminal 20 receives the WUS and estimates the amount of the shift in the subcarrier between the reference sequence and the WUS. In a case where the estimated amount of the shift is an amount of the shift for the WUS ID that is associated with the UE group to which user terminal 20 belongs, user terminal 20 determinates that the received WUS is associated with the UE group to which user terminal 20 belongs. In the case where the received WUS is associated with the UE group to which user terminal 20 belongs, user terminal 20 performs the monitoring of the PO.

In this method, the same sequence is used for the WUS with which different WUS IDs are associated. Because of this, the detection processing can be simplified. For this reason, simple detection processing of the WUS can be performed robustly.

It is noted that the WUS ID may be associated with a reference that serves as a reference for the shift in the subcarrier (in other words, the WUS, the amount of the shift of which is zero).

Furthermore, in a case where multiple WUSs to which the example in FIG. 11 is applied are transmitted, user terminal 20 may perform the channel estimation using at least one of the received WUSs and, based on a result of the channel estimation, may perform the estimation of the amount of the shift.

It is noted that the example in which the WUS ID is indicated by the phase difference between the reference sequence and the WUS, and the example in which the WUS ID is indicated by the amount of the shift in the frequency direction (the amount of the shift in the subcarrier) between the reference sequence and the WUS are described above, but that the present disclosure is not limited to this. For example, the WUS ID may be indicated by a combination of the phase difference between the reference sequence and the WUS and the amount of shift in the frequency direction between the reference sequence and the WUS.

It is noted that, in a case where the WUS ID is indicated by the combination of the phase difference and the amount of shift, user terminal 20 may estimate the WUS ID associated with the WUS by combining the detection processing operations described above.

Furthermore, in FIGS. 10 and 11, the example in which the WUSs have the same size (the same number of REs) is illustrated, but the WUSs may have different sizes (different numbers of REs). For example, the WUS may be configured using one or several portions of the reference sequence.

For example, the number of REs may be changed for each WUS. The changing of the number of the REs for each WUS is equivalent to the changing of the number of the REs that are used for each WUS. For example, the WUS ID and the number of the REs that are used may be associated with each other. In this case, the WUS ID may be indicated by the number of the REs that are used.

Furthermore, in FIGS. 10 and 11, the example in which positions of REs from WUSs #1 to #3 are the same is illustrated, but the present disclosure is not limited to this. For example, the positions of the REs that are used may be changed for each WUS. For example, the WUS ID and the positions of the REs that are used may be associated with each other. In this case, the WUS ID may be indicated by the positions of the REs that are used.

Alternatively, by changing at least one of the positions and the number of the REs that are used for each WUS, the UE group ID may be indicated by a combination of the positions and the number of the REs.

Furthermore, in FIGS. 10 and 11, an example in which WUSs #1 to #3 are configured with contiguous REs in the frequency direction are illustrated, but the present disclosure is not limited to this. The WUS may be configured with REs that are positioned discretely. For example, the position of the RE may be changed for every WUS. For example, by associating the WUS ID and a pattern of the positions of discrete REs with each other, the WUS ID may be indicated by a difference in the pattern.

In the following, an example of the association between the WUS ID and the pattern of the positions of the REs that are used by the WUS is described.

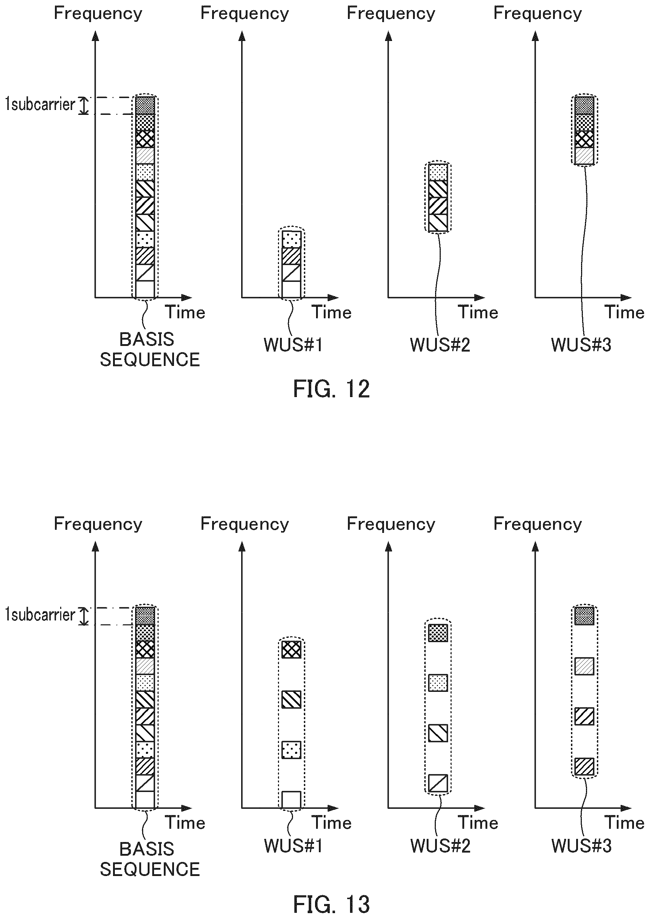

FIG. 12 is a diagram illustrating a third example of the association between the WUS and the WUS ID according to the present embodiment. FIG. 13 is a diagram illustrating a fourth example of the association between the WUS and the WUS ID according to the present embodiment.

In FIGS. 12 and 13, in the same as in FIG. 10, the reference sequence that serves as the reference for the generation of the WUS, and WUSs #1 to #3 that are generated based on the reference sequence are illustrated. The horizontal axis in FIGS. 12 and 13 represents time and the vertical axis represents a frequency.

Then, in the reference sequence and the WUS, one rectangle that results from partitioning in the frequency direction, for example, indicates one RE in the same manner as in FIG. 10.

In FIGS. 12 and 13, a display aspect of each RE that is included in the reference sequence and the WUS represents an example of an element in a sequence that is used for the WUS. For example, the same display aspect represents that the element in the sequence that is used for the WUS is the same. The same sequence is used for the WUS that is illustrated in FIGS. 12 and 13.

Then, the WUS ID that is associated with each of WUSs #1 to #3 is indicated by the positions of the REs for the WUS in the frequency direction.

For example, WUS #1 in FIG. 12 is equivalent to a low frequency-side portion of the reference sequence. WUS #3 is equivalent to a high frequency-side portion of the reference sequence. WUS #2 is equivalent to a portion between WUS #1 and WUS #2.

For example, WUSs #1 to #3 in FIG. 13 include REs of different subcarriers. Each of WUS #1 to WUS #3 in FIG. 13 includes REs that line up in the form of a comb in the frequency direction.

In the case of an example in each of FIGS. 12 and 13, user terminal 20 receives the WUS and estimates positioning of the WUS in the frequency direction. Then, in a case where the estimated positioning is positioning of the WUS ID that is associated with the UE group to which user terminal 20 belongs, user terminal 20 determines that the received WUS is associated with the UE group to which user terminal 20 belongs. In the case where the received WUS is associated with the UE group to which user terminal 20 belongs, user terminal 20 performs the monitoring of the PO.

In the estimation of the positioning of the WUS in the frequency direction, for example, a cross-correlation between the reference sequence and the received WUS may be used.

In the example in each of FIGS. 12 and 13, the same sequence is used for the WUS to which different WUS IDs are associated. Because of this, the detection processing can be simplified. For this reason, simple detection processing of the WUS can be performed robustly.

It is noted that, in a case where multiple WUSs to the examples in FIG. 12 and/or FIG. 13 are applied are transmitted, user terminal 20 may perform the channel estimation using at least one of the received WUSs, and based on a result of the channel estimation, may perform estimation of the positioning in the frequency direction. Alternatively, in the case where multiple WUSs to which the examples in FIG. 12 and/or FIG. 13 are applied are transmitted, user terminal 20 may perform the cross-correlation using at least two of the received WUSs, and, based on a result of the cross-correlation, may perform the estimation of the positioning in the frequency direction. Alternatively, user terminal 20 may perform the computation of the channel estimation and the cross-correlation, and, based on results of the computation of both, may perform the estimation of the positioning in the frequency direction.

The embodiment in the present disclosure is described above.

### <Hardware Configuration>

It is noted that the block diagram that is referred to for the description of the embodiment illustrates blocks on a per-function basis. These functional blocks (constituent sections) are realized by an arbitrary combination of at least pieces of hardware or pieces of software. Furthermore, a method of realizing each functional block is not particularly limited. That is, each functional block may be realized using one apparatus that results from physical or logical coupling, and may be realized by making a connection to two or more apparatuses that are separated physically or logically, in a direct or indirect manner (for example, such as in a wired or wireless manner) and using these multiple apparatuses. The functional block may be realized by combining the one or more apparatuses, which are described above, and a piece of software.

The functions include determining, deciding, judging, calculating, computing, processing, deriving, investigating, looking-up, ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like, and are not limited to these. For example, a functional block (a constituent section) that causes a transmission function to be performed is referred to a transmission section (a transmitting unit) or a transmitter. Any one of the functional blocks is as described above, and a method of realizing a function block is not particularly limited.

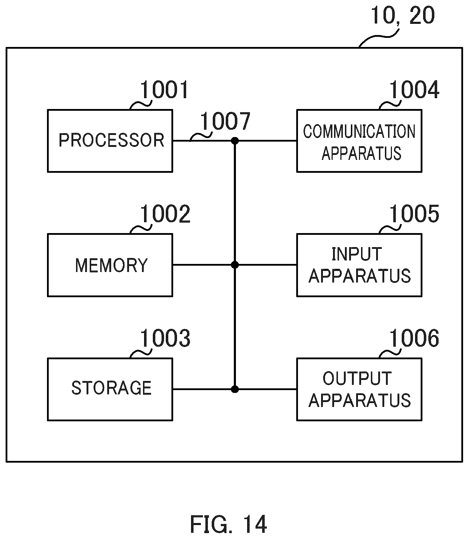

For example, a base station, a user terminal, and the like according to an embodiment in the present disclosure may function as a computer that performs processing for a radio communication method in the present disclosure. FIG. 14 is a diagram illustrating an example of a hardware configuration of a base station and a user terminal according to an embodiment in the present disclosure. Radio base station 10 and user terminal 20, which are described above, may be physically configured as a computer apparatus that includes processor 1001, memory 1002, storage 1003, communication apparatus 1004, input apparatus 1005, output apparatus 1006, bus 1007, and the like.

It is noted that, in the following description, the term apparatus can be replaced with a circuit, a device, a unit, or the like. Hardware configurations of radio base station 10 and user terminal 20 may be employed in such a manner that one or more apparatuses that are illustrated are included, and may be configured without including one or several of the apparatuses.

A prescribed piece of software (a program) is read to be loaded onto a piece of hardware such as processor 1001, memory 1002, or the like, and thus processor 1001 performs an arithmetic operation, thereby controlling communication by communication apparatus 1004 or controlling at least one of reading and writing of data from and to memory 1002 and storage 1003. When this is done, a function of each of radio base station 10 and user terminal 20 is realized.

Processor 1001, for example, causes an operating system to operate and thus controls an entire computer. Processor 1001 may be configured with a central processing apparatus (a central processing unit (CPU)) that includes an interface with a peripheral apparatus, a control apparatus, an arithmetic operation apparatus, a register, and the like. For example, control section 103 and control section 203, which are described above, and the like may be realized by processor 1001.

Furthermore, processor 1001 reads a program (a program code), a software module, data, and the like from at least one of storage 1003 and communication apparatus 1004 into memory 1002, and performs various processing operations according to these. As the program, a program is used that causes the computer to perform at least one or several of the operations in the embodiment described above. For example, control section 103 of radio base station 10 and/or control section 203 of user terminal 20 may be realized by a control program that is stored in memory 1002 and operates in processor 1001, and may also be realized in the same manner for any other functional block. The various processing operations described above are described as being performed by one processor 1001, but may be performed by two or more processors 1001 at the same time or sequentially. Processor 1001 may be integrated into one or more chips. It is noted that the program may be transmitted from a network over an electric telecommunication line.

Memory 1002 is a computer-readable recording medium, and, for example, may be configured with at least one of a Read Only Memory (ROM), an Erasable Programmable ROM (EPROM), an Electrically Erasable Programmable ROM (EEPROM), a Random Access Memory (RAM), and the like. Memory 1002 may be referred to a register, a cache, a main memory (a main storage apparatus), or the like. A program (a program code), a software module, or the like that is executable in order to perform the radio communication method according to the embodiment in the present disclosure can be retained in memory 1002.

Storage 1003 is a computer-readable recording medium, and, for example, may be configured with at least one of an optical disk such as a Compact Disc ROM (CD-ROM), a hard disk drive, a flexible disk, a magneto-optical disk (for example, a compact disk, a digital versatile disk, a Blu-ray (a registered trademark) disk), a smart card, a flash memory (for example, a card, a stick, or a key drive), a floppy (a registered trademark) disk, a magnetic strip, and the like. Storage 1003 may be referred to as an auxiliary storage apparatus. The storage medium described above, for example, may be a database or a server that includes at least one of memory 1002 and storage 1003, or any other suitable medium.

Communication apparatus 1004 is hardware (a transmission and reception device) for performing communication between radio base station or user terminal , and a computer through at least one of a wired network and a radio network, and, for example, is also referred to as a network device, a network controller, a network card, a communication module, or the like. Communication apparatus 1004, for example, may be configured to include a high frequency switch, a duplexer, a filter, a frequency synthesizer, and the like in order to realize at least one of Frequency Division Duplex (FDD) and Time Division Duplex (TDD). For example, transmission section 101, reception section 102, transmission section 201, and reception section 202, which are described, and the like may be realized by communication apparatus 1004.

Input apparatus 1005 is an input apparatus (for example, a keyboard, a mouse, a microphone, a switch, a button, a sensor, or the like) that receives input from the outside. Output apparatus 1006 is an output apparatus (for example, a display, a speaker, an LED lamp, or the like) that performs output to the outside. It is noted that input apparatus 1005 and output apparatus 1006 may be configured to be integrated into one piece (for example, a touch panel).

Furthermore, apparatuses, such as processor 1001, memory 1002, are connected to bus 1007 for communicating information. Bus 1007 may be configured using a single bus and may be configured using a bus that differs from one apparatus to another.

Furthermore, each of radio base station 10 and user terminal 20 may be configured to include pieces of hardware, such as a microprocessor, a Digital Signal Processor (DSP), an Application Specific Integrated Circuit (ASIC), a Programmable Logic Device (PLD), and a Field Programmable Gate Array (FPGA). One or several of, or all of functional blocks of each of radio base station 10 and user terminal 20 may be realized using the hardware. For example, processor 1001 may be integrated into at least one of these pieces of hardware.

### (Information Notification and Signaling)

Information notification is not limited to the aspect and the embodiment, which are described in the present disclosure, and may be performed using any other method. For example, the information notification may be performed with Physical Layer Signaling (for example, Downlink Control Information (DCI), Uplink Control Information (UCI)), Higher Layer Signaling (for example, Radio Resource Control (RRC) Signaling, Medium Access Control (MAC) Signaling, report information (a Master Information Block (MIB)), a System Information Block (SIB)), any other signal, or a combination of these. Furthermore, the RRC signaling may be referred to as an RRC message, and, for example, may be an RRC Connection Setup Message, an RRC Connection Reconfiguration Message, or the like.

### (Application System)

Each of the aspects and embodiments, which are described in the present disclosure, may find application in at least one of Long Term Evolution (LTE), LTE-Advanced (LTE-A), SUPER 3G, IMT-Advanced, a 4th generation mobile communication system (4G), a 5th generation mobile communication system (5G), Future Radio Access (FRA), new Radio (NR), W-CDMA (a registered trademark), GSM (a registered trademark), CDMA 2000, Ultra Mobile Broadband (UMB), IEEE 802.11 (Wi-Fi (a registered trademark)), IEEE 802.16 (WiMAX (a registered trademark)), IEEE 802.20, Ultra-WideBand (UWB), Bluetooth (a registered trademark), any other system that uses a suitable system, and a next-generation system that results from the expansion which is based on these. Furthermore, application in a combination of multiple systems (for example, a combination of at least one of LTE and LTE-A and 5G, or the like) may be possible.

### (Processing Procedure and Others)

In a processing procedure, a sequence, a flowchart, and the like according to each of the aspects and the embodiment, which are described in the present disclosure, the order may be changed as long as there is no conflict. For example, various step elements of the method that is described in the present disclosure are presented in the exemplary order and is not limited to the presented specific order.

### (Operation by the Base Station)

In some cases, a specific operation as performed by the base station in the present disclosure is performed by a higher node (an upper node) that is at a higher level than the base station, depending on the situation. It is apparent that, in a network that is made up of one or more network nodes each of which has a base station, various operations that are performed for communication with a terminal can be performed by at least one of the base station and a network node (for example, an MME, an S-GW, or the like is considered, but no limitation to these is imposed) other than the base station. In the above description, the case where one network node other than the base station is provided is given as an example, but a combination of other multiple network nodes (for example, an MME and an S-GW) may be provided.

### (Input And Output Direction)

Information (refer to the subtitle "Information And Signal") or the like can be output from a higher layer (or a lower layer) to the lower layer (or the higher layer). The information or the like may be input and output through multiple network nodes.

### (Handing the Information And the like that Are Input And Output)

The information and the like that are input and output may be retained in a specific place (for example, a memory) and may be managed using a management table. The information and the like that are input and output can be overwritten, updated, or added. The information and the like that are output may be deleted. The information and the like that are input may be transmitted to any other apparatus.

### (Judging Method)

Judging may be performed with a value (0 or 1) that is represented by one bit, may be performed with a boolean value (true or false), and may be performed with comparison of numerical values (for example, comparison with a prescribed value).

### (Software)

Software is referred to as software, firmware, middleware, a microcode, or hardware description language, but, regardless of whether or not any other terms are available, can be broadly interpreted to mean a command, an instruction set, a code, a code segment, a program code, a program, a subprogram, a software module, an application, a software application, a software package, a routine, a subroutine, an object, an executable file, an execution file, a procedure, a function, or the like.

Furthermore, the software, the command, the information, and the like may be transmitted and received through a transfer medium. For example, in a case where the software is transmitted from a website, a server, or any other remote source using at least one of a cable technology (a coaxial cable, optical fiber, a twisted pair, a Digital Subscriber Line (DSL), or the like) and a radio technology, at least one of the cable technology and the radio technology (an infrared ray, a microwave, or the like) falls with the definition of the transfer medium.

### (Information and Signal)

The information and the signal, which are described in the present disclosure, and the like may be represented using any one of various different technologies. For example, data that can be referred to throughout the above description, an instruction, a command, information, a signal, a bit, a symbol, a chip, and the like may be represented by voltage, current, an electromagnetic wave, a magnetic field or a magnetic particle, a photo field or a photo, or an arbitrary combination of these.

It is noted that the terms which are described in the present disclosure and the terms which are necessary for an understanding of the present disclosure may be replaced with the terms that have the same or similar meaning. For example, at least one of a channel and a symbol may be a signal (signaling). Furthermore, the signal may be a message. Furthermore, a Component Carrier (CC) may be referred to as a carrier frequency, a cell, a frequency carrier, or the like.

### ("System" and "Network")

The terms "system" and "network" that are used in the present disclosure are interchangeably used.

### (Names of a Parameter And a Channel)

Furthermore, the information and the parameter, which are described in the present disclosure, and the like may be represented by an absolute value, may be represented using a relative value from a prescribed value, and may be represented using separate corresponding information. For example, a radio resource may be indicated by an index.

A name that is used for the parameter described above is also not a limited name in any respect. Moreover, in some cases, an equation or the like that use these parameters are different from those that are explicitly disclosed in the present disclosure. Various channels (for example, a PUCCH, a PDCCH, and the like) and information elements can be identified with all suitable names. Because of this, various names that are allocated to these various channels and information elements are not limited names in any respect.

### (Base Station (Radio Base Station))

In the present disclosure, the terms "base station (BS)", "radio base station", "fixed station", "NodeB", "eNodeb (eNB)", "gNodeB (gNB)", "access point", "transmission point", "reception point", "transmission/reception point", "cell", "sector", "cell group", "carrier", and "component carrier", and the like can be interchangeably used. In some cases, the terms "macrocell", "small cell", and "femtocell" are used to refer to the base station.

The base station can accommodate one or more (for example, three) cells. In a case where the base station accommodates multiple cells, an entire coverage area that is covered by the base station can be divided into multiple smaller areas. In each of the smaller cells, a communication service can be provided by a base station subsystem (for example, indoors small-sized base station (Remote Radio Head (RRH))). The term "cell" or "sector" refers to one or several portions or all portions of a coverage area that is covered by at least one of a base station and a base station subsystem that perform the communication service in this coverage.

### (Terminal)

In the present disclosure, the terms "mobile station (MS)", "user terminal", "user equipment (UE)", and "terminal", and the like can be interchangeably used.

In some cases, a person of ordinary skill in the art refers to the mobile station as a subscriber station, a mobile unit, a subscriber unit, a radio unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or using several other suitable terms.

### (Base Station And Mobile Station)

At least one of the base station and the mobile station may be referred to as a transmission apparatus, a reception apparatus, a communication apparatus, or the like. It is noted that at least one of the base station and the mobile station may be a device that is mounted into a mobile body or the mobile body itself. The mobile body may be a vehicle (for example, an automobile or an airplane), may be an unmanned mobile body (for example, a drone, an autonomous vehicle, or the like), and may be a robot (a manned-type or unmanned-type robot). It is noted that at least one of the base station and the mobile station also includes an apparatus that does not necessarily move at the time of communication operation. For example, at least one of the base station and the mobile station may be Internet-of-Things (IoT) equipment such as a sensor.

Furthermore, the base station in the present disclosure may be replaced with the user terminal. For example, each of the aspects and the embodiment in the present disclosure may find application in a configuration that results from replaying communication between the base station and the user terminal with communication (which, for example, may be referred to as device-to-device (D2D), vehicle-to-everything (V2X), or the like) between each of the multiple user terminals. In this case, user terminal 20 may be configured to have the function that base station 10 described above has. Furthermore, the terms "uplink" and "downlink" may be replaced with the expression (for example, "side") that corresponds to inter-terminal communication. For example, an uplink channel, a downlink channel, and the like may be replaced with a side channel.

In the same manner, the user terminal in the present disclosure may be replaced with the base station. In this case, base station 10 is configured to have the function that user terminal 20 described above has.

### (Meaning And Interpretation of a Term)

In some cases, the meaning of the terms "determining" and "determining" are broadened to include various operations. Regarding "determining" and "deciding", for example, a thing that is judged, calculated, computed, processed, derived, investigated, looked up (search or inquiry) (for example, as looked up in a table, a database, or a separate data structure), and ascertained can be inclusively considered as a thing that is determined or decided. Furthermore, regarding to "determining" and "deciding", a thing that is received (for example, as information is received), transmitted (for example, as information is transmitted), input, output, or accessed (for example, as data in a memory is accessed) can be inclusively considered as a thing that is determined or "decided". Furthermore, regarding to "determining" and "deciding", a thing that is resolved, selected, chosen, established, compared, or so on can be inclusively considered as a thing that is "determined" or "decided". More precisely, regarding to "determining" and "deciding", a thing on which any operation is performed can be inclusively considered as a thing that is "determined" or "decided". Furthermore, "determining (deciding)" may be replaced with "assuming", "expecting", "considering", or the like.

The expressions "connected" and "coupled" or all variants of the expressions can mean all direct or indirect connection and coupling between two or more elements, and can imply the presence of one or more intermediate elements between two elements that are "connected" or "coupled" to each other. The connection and the coupling between elements may be made physically, may be made logically, or may be made both physically and logically. For example, "connection" may be replaced with "access". In the case of the use in the present disclosure, it is considered that two elements are "connected" or "coupled" to each other using at least one of one or more electric wires, a cable, and a printed electric connection, and an electromagnetic energy or the like that has a wavelength in a radio frequency domain, a microwave region, and a light (both visible light and invisible light) region, as several non-limiting and non-inclusive examples.

A reference signal can also be referred to as a Reference Signal (RS), and, according to standards that are applied, may be referred to a pilot.

Unless otherwise specified, the expression "based on" that is used in the present disclosure does not mean "based only on". In other words, the description "based on" means both "based only on" and based at least on".

Any reference to elements that use the terms "first" and "second" and the like that are used in the present disclosure does not generally limit a quantity of and the order of these elements. The terms can be used, as a method of distinguishing between two or more elements, in the present disclosure. Therefore, reference to first and second elements does not mean that only two elements are employed, or that the first element has to precede the second element in any form.

"Means" in a configuration of each of the apparatuses described above may be replaced with "section", "circuit", "device", or the like.

In the present disclosure, in a case where "include", "including", and variants of these are used, these terms are intended to have a broad meaning in the same manner as the term "comprising". Moreover, the term "or" that is used in the present disclosure is intended not to be exclusive OR.

The radio frame may be configured with one or more frames in a time domain. Each of the one or more frames in the time domain may be referred to as a subframe. The subframe may be configured with one or more slots in the time domain. The subframe may be a fixed time length (for example, 1 ms) that does not depend on numerology.

The numerology may be a communication parameter that is applied to at least one of transmission and reception of a certain signal or channel. The numerology, for example, indicates at least one of Subcarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in a frequency domain, specific windowing processing that is performed by the transmission and reception apparatus in the time domain, and the like.

The slot is configured with one or more symbols (an Orthogonal Frequency Division Multiplexing (OFDM) symbol, a Single Carrier Frequency Division Multiple Access (SC-FDMA) symbol, or the like) in the time domain. The slot may be a time unit that is based on the numerology.

The slot may include multiple mini-slots. Each of the mini-slots may be configured with one or more symbols in the time domain. Furthermore, the mini-slot may be referred to as a subslot. The mini-slot may be configured with a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or a PUSCH) mapping type B.

Any one of the radio frame, the subframe, the slot, the mini-slot, and the symbol represents the time unit when transferring a signal. A separate name that corresponds to each of the radio frame, the subframe, the slot, the mini-slot, and the symbol may be used.

For example, one subframe may be referred to as a Transmission Time Interval (TTI), multiple contiguous subframes may be referred to as a TTI, and one slot or one mini-slot may be referred to as a TTI. More precisely, at least one of the subframe and the TTI may be a subframe (1 ms) in the existing LTE, may be a duration (for example, 1 to 13 symbols) that is shorter 1 ms, and may be a duration that is longer than 1 ms. It is noted that a unit that represents the TTI may be referred to a slot, a mini-slot, or the like instead of a subframe.

At this point, the TTI, for example, refers to a minimum time unit for scheduling in radio communication. For example, in an LTE system, the base station performs scheduling for allocating a radio resource (a frequency bandwidth, a transmit power, or the like that is used in each user terminal) in a TTI unit to each user terminal. It is noted that the definition of the TTI is not limited to this.

The TTI may be a transmission time unit, such as a data packet (a transport block) that is channel-coded, a code block, or a codeword, and may be a processing unit, such as scheduling or a link adaptation. It is noted that, when the TTI is assigned, a time section (for example, the number of symbols) to which the transport block, the code block, the codeword, or the like is actually mapped may be shorter than the TTI.

It is noted that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that makes up the minimum time unit for the scheduling may be controlled.

A TTI that has a time length of 1 ms may be referred to as a usual TTI (a TTI in LTE Rel.8-12), a normal TTI, a long TTI, a usual subframe, a normal subframe, a long subframe, a slot, or the like. A TTI that is shorter than the usual TTI may be referred to as a shortened TTI, a short TTI, a partial TTI (a fractional TTI), a shortened subframe, a short subframe, a mini-slot, a subslot, a slot, or the like.

It is noted that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be the same regardless of the numerology, and, for example, may be 12. The number of subcarriers that are included in the RB may be determined based on the numerology.

Furthermore, the time domain of the RB may include one or more symbols and may have a length of one slot, one mini-slot, one subframe, or one TTI. One TTI, one subframe, and the like each may be configured with one or more resource blocks.

It is noted that one or more RBs may be referred to as a Physical RB (PRB), a Sub-carrier Group (SCG), a Resource Element Group (REG), a PRB pair, an RB pair, or the like.

Furthermore, the resource block may be configured with one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. At this point, the common RB may be specified with an RB index that uses a common reference point of the carrier as a reference. The PRBs may be defined with a certain BWP and may be numbered within the BWP.

A UL BWP and a DL BWP may be included in the BWP. For the UE, one or more BWPs may be set to be within one carrier.

At least one of the BWPs that are set may be active, and it may not be assumed that the UE transmits and receives a prescribed signal or channel outside of the BWP that is active. It is noted that, in the present disclosure, "cell", "carrier", and the like may be replaced with "BWP".

Structures of the radio frame, the subframe, the slot, the mini-slot, the symbol, and the like are only described as examples. For example, the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be configured to be variously changed.

The "maximum transmit power" described in the present disclosure may mean a maximum value of the transmit power, may mean the nominal UE maximum transmit power, and may mean the rated UE maximum transmit power.

In the present disclosure, for example, in a case where articles, such as a, an and the in English, are added during translation, a noun that follows these articles may have the same meaning as when used in the plural.

In the present disclosure, the expression "A and Bare different" may mean that "A and B are different from each other". It is noted that the expression may mean that "A and B are different from C". The expressions "separated" and "coupled" may also be interpreted in the same manner as the expression "A and B are different".

### (Variation of the Aspect)

The aspects and the embodiments in the present disclosure may be used individually, may be used in combination, and may be used in a switching manner depending on implementation. Furthermore, notification (for example, notification that "X is present") is not limited to being explicitly performed, and may be performed implicitly (for example, notification of prescribed information is not performed).

The detailed description is provided above in the present disclosure, and it is apparent that the present disclosure is not limited to the embodiment that is described in the present disclosure. An amendment and an alteration to the present disclosure can be made without departing from the gist and scope of the present disclosure that is defined by claims. Therefore, the description in the present disclosure is for the purpose of providing an exemplary description, and does not impose any limitation in meaning to the present disclosure.

An aspect of the present disclosure is useful for a radio communication system.

### Reference Signs List

10 Radio base station
20 User terminal
101, 201 Transmission section
102, 202 Reception section
103, 203 Control section

## Claims

1. A user terminal, comprising:
a reception section that receives a wake-up signal; and
a control section that detects an identifier associated with the wake-up signal and that controls, based on the detected identifier, reception of a control signal associated with the wake-up signal, wherein
the number of the wake-up signals is smaller than a number relating to a terminal group.

2. The user terminal according to claim 1, wherein the number of the wake-up signals is 1.

3. The user terminal according to claim 1, wherein the terminal group associated with a first identifier among a plurality of the identifiers is included in the terminal group associated with a second identifier among the plurality of identifiers.

4. The user terminal according to claim 1, wherein the control section detects the identifier associated with each of two or more of the wake-up signals and controls reception of the control signal based on a combination of the two or more detected identifiers.

5. The user terminal according to claim 4, wherein the combination of the two or more identifiers includes a combination that contains the identifier of which the wake-up signal is detected or a combination that contains the identifier of which the wake-up signal is not detected.

6. A radio base station, comprising:
a transmission section that transmits a wake-up signal; and
a control section that associates an identifier with the wake-up signal, wherein
the number of the wake-up signals is smaller than a number relating to a terminal group.

7. A radio communication method, comprising:
receiving a wake-up signal;
detecting an identifier associated with the wake-up signal; and
controlling, based on the detected identifier, reception of a control signal associated with the wake-up signal, wherein
the number of the wake-up signals is smaller than a number relating to a terminal group.
